# EUROPÄISCHE PATENTSCHRIFT

(11) **EP 0 318 885 B1**
(45) Veröffentlichungstag und Bekanntmachung des Hinweises auf die Patenterteilung: **20.01.1993**
(21) Anmeldenummer: 88119776.8
(22) Anmeldetag: 28.11.1988
(51) Int. Cl.: F01P 11/10, B60K 11/04, F01P 11/12

(54) **Wärmetauscher, insbesondere Kühler für Antriebsmaschine eines Fahrzeuges**
Heat exchanger, especially a cooler for the engine of a vehicle
Echangeur de chaleur, notamment refroidisseur pour moteur de véhicule

(30) Priorität: 02.12.1987 US 127728
(43) Veröffentlichungstag der Anmeldung: 07.06.1989
(73) Patentinhaber: DEERE & COMPANY, Moline, Illinois 61265 (US)
(72) Erfinder: Easton, David Joseh, Cedar Falls Iowa 50613 (US)
(74) Vertreter: Feldmann, Bernhard

(56) Entgegenhaltungen:
- FR-A- 2 317 118
- US-A- 3 313 342
- US-A- 4 295 521
- US-A- 4 542 786

## Beschreibung

Die Erfindung betrifft einen Wärmetauscher, insbesondere Kühler für die Antriebsmaschine eines Fahrzeuges, mit zwei im wesentlichen flachen, V-förmig zueinander angeordneten Wärmetauscherelementen, die im Bereich der Basislinie des V durch einen schmalen offenen Zwischenraum zueinander beabstandet sind, und mit wenigstens einem Lüfter, der einen Kühlmedienstrom in die sich öffnende Seite des V richtet.

Kühler für Fahrzeugmaschinen sind üblicherweise im vorderen Bereich des Fahrzeuges angeordnet und liegen parallel zu der Frontseite des Fahrzeuges. Die Kühlluft kann entsprechend der Vorwärtsbewegung des Fahrzeuges durch den Kühler hindurchtreten. Ferner ist normalerweise zusätzlich ein Kühlerlüfter vorgesehen, der in Fahrtrichtung hinter dem Kühler liegt und größere Mengen Kühlluft durch den Kühler zieht.

Bezüglich dieser Anordnung sind eine Reihe von Varianten bekannt geworden. Beispielsweise zeigt die US-A-3,715,001 einen flachen Kühler, welcher sich in einer relativ zur vertikalen Achse abgewinkelten Lage befindet. Die Ober- und Unterseite des Kühlers sind gegen die Wände einer Kammer abgedichtet. An jeder Seite des Kühlers sind Lüfter vorgesehen. Dieser Aufbau ermöglicht es der Luft, in den oberen Teil des Kühlers einzutreten und an der anderen Seite auszutreten, oder umgekehrt. Es wird vermieden, daß Luft jenseits der Kammer hinter den Kühler gelangen kann. Vielmehr muß die gesamte Luft, die durch das System strömt, durch den Kühler hindurchtreten.

Durch die FR-A-2 317 118 ist eine Kühlanlage für Kraftfahrzeuge bekannt geworden, bei der durch einen Lüfter Frischluft im Bereich oberhalb des Fahrerhausdaches angesaugt und nach unten umgelenkt wird. Hier trifft die Luft auf zwei V-förmig zueinander ausgerichtete, nach oben auseinanderlaufende flache Kühler. Die im Scheitelbereich des V liegenden Kanten der Kühler sind durch einen Teil des Fahrgestellrahmens abgedichtet. Eine ähnliche Ausbildung geht aus der US-A-3,995,603 hervor, der zufolge zwei flache Kühler an der Frontseite einer Maschine angeordnet sind, die einen Winkel zueinander einnehmen, dessen Scheitel senkrecht zur Mittelachse der Maschine verläuft. Die benachbarten Kanten der beiden Kühler sind durch einen Gehäuseteil abgedichtet, während die außenliegenden Kanten gegenüber einer Abdeckung abgedichtet sind, welche einen vor dem Kühler angeordneten Axiallüfter umgibt. Auch bei den hier beschriebenen Kühleranordnungen muß die gesamte Luft zwangsweise durch den Kühler hindurchtreten.

Die US-A-4,076,072 lehrt einen Kühleraufbau, der aus einer Vielzahl winklig angeordneter Kühlerelemente besteht, welche in einem Zickzack-Muster angeordnet sind. Die jeweiligen Scheitelpunkte des Zickzack sind zur Vorder- bzw. Hinterseite des Fahrzeuges ausgerichtet. Ein Axiallüfter liegt hinter dem Zickzack-Kühleraufbau.

In einigen Anwendungen, zum Beispiel in landwirtschaftlichen oder industriellen Einrichtungen, befinden sich größere Mengen von Fremdkörpern, wie Staub und Schutt in der sich dem Kühler annähernden Luft. Bei den zuvor genannten Kühleraufbauten muß die gesamte Luft zusammen mit den von ihr getragenen Fremdkörpern durch den Kühler treten. Infolge hiervon ergibt sich eine praktische Begrenzung der Dichte der Kühlrippen von etwa 3 bis 4 Rippen pro cm (8 bis 10 Rippen pro inch). Bei größerer Dichte verstopft der Kühler schnell mit Fremdkörpern.

Durch die US-A-4,295,521, die US-A-4,401,154 und die US-A-4,542,786 sind Weiterentwicklungen der Kühlerelemente mit Zickzack-Struktur angegeben. Hier ist an dem hinteren Scheitelpunkt benachbarter Kühlerelemente ein schmaler Spalt vorgesehen, so daß die Luft zwischen den Kühlerelementen hindurchtreten kann, anstatt durch das Kühlerinnere zu treten. Benachbarte Kühlerelemente sind nicht sehr spitzwinklig zueinander angeordnet, so daß der Hauptluftstrom auf die Vorderseite der Kühlerelemente aufprallt, was zu Verwirbelungen führt. Die Ausbildung gemäß US-A-4,542,786 stellt einen Versuch dar, diese Verwirbelungen zu reduzieren, indem die durch das Kühlerelement verlaufenden Kühlröhren eine entsprechende Ausrichtung erhalten.

Der schmale Spalt zwischen den Kühlerelementen erlaubt es, daß Fremdkörper durch den Kühler treten können, ohne jedoch durch eines der Kühlerelemente hindurch treten zu müssen. Dies macht es möglich, daß die Kühlrippen enger zusammengepackt werden können. Obwohl dies in den genannten US-Patenten nicht erwähnt wurde, haben die entsprechenden kommerziellen Kühler Rippendichten in der Größenordnung von 13 bis 14 Rippen pro cm (33 bis 35 Rippen pro inch). Der Aufbau gemäß der US-A-4,295,521, US-A-4,401,154 und US-A-4,542,786 hat den Nachteil, daß die Anzahl der Kühlerelemente und ihre Lage ein hohes Maß an Komplexität und Turbulenz mit sich bringt. Ferner kann durch mehrere Spalte zwischen den 1/2 Dutzend Kühlerelementen ein beträchtliches Luftvolumen hindurchtreten. Dieses Luftvolumen hat keine Kühlwirkung. Schließlich wird die einmal durch den Kühler hindurchtretende, mit Fremdkörpern beladene Luft nach hinten auf die Maschine geblasen, wo sich die Fremdkörper ablagern können.

Die mit der Erfindung zu lösende Aufgabe wird darin gesehen, einen neuen Wärmetauscher der eingangs genannten Art bereitzustellen, bei dem der Anteil des nicht durch die Wärmetauscherelemente hindurchtretenden Kühlmediumstromes klein gehalten wird und bei dem eine gleichmäßige Durchströmung der Gesamtfläche der Wärmetauscherelemente unter weitgehender Vermeidung von die Strömung behindernden Verwirbelungen erfolgt.

Die Aufgabe wird nach der Erfindung durch die kennzeichnenden Merkmale des Patentanspruches 1 gelöst. Die V-förmig zueinander angeordneten Wärmetauscherelemente sind oben weiter beabstandet als unten, wobei sich unten der Zwischenraum befindet, durch den die Fremdkörper hindurchtreten können. Im wesentlichen zwischen den Wärmetauscherelementen soll eine Plenumkammer ausgebildet sein. Es handelt sich hierbei um eine unter erhöhtem Druck des Kühlmediums stehende Kammer, wobei das Kühlmedium infolge des Überdruckes aus der Plenumkammer durch die Wärmetauscherelemente hindurchgedrückt wird. Zur Erzeugung des Druckes in der Plenumkammer ist wenigstens ein Lüfter vorgesehen. Die Wärmetauscherelemente sind somit in Form eines Lufttrichters angeordnet, wobei die Durchströmung des Kühlmediums im wesentlichen durch die Gesamtfläche der Wärmetauscherelemente erfolgt.

Um die Plenumkammer allseits abzuschließen, werden vorzugsweise die Seiten des V durch Seitenabschlußmittel, zum Beispiel Stirnwände, verschlossen. Als Lüfter eignet sich besonders ein Radiallüfter. Zwischen Lüfter und Wärmetauscherelementen sind bevorzugt Luftführungsmittel vorgesehen. Bei Verwendung von Radiallüftern müssen diese Luftführungsmittel so ausgebildet sein, daß sie dem Kühlmedium eine Anfangsströmungsrichtung verleihen, die das Kühlmedium in den Plenumraum leitet. Bei einem Radiallüfter, der das Kühlmedium quer zu seiner Drehachse abbläst, sind als Luftführungsmittel ein Windlauf und ein Ansaugabschluß geeignet. Der durch den Lüfter in die Plenumkammer geleitete Luftstrom soll im wesentlichen auf die Öffnung an der Basis des V (Spalt zwischen den Wärmetauscherelementen) gerichtet sein. Hierdurch werden sowohl die in der Luft enthaltenen Fremdkörper auf den Spalt gerichtet, als auch der erforderliche Druck in der Plenumkammer aufgebaut, so daß entsprechend der über den Wärmetauscherelementen liegenden Druckdifferenz Luft durch die Wärmetauscherelemente hindurchtritt. Da lediglich ein Spalt benötigt wird, tritt lediglich ein geringer Luftanteil durch das System, der nicht an den Kühlrippen vorbeistreicht.

Die Rippen der Wärmetauscherelemente sind vorzugsweise im wesentlichen parallel zueinander und von oben nach unten gerichtet. Sie verlaufen parallel zu den V-Schenkeln, um den Luftwiderstand des auf die Basis (Spalt) gerichteten Luftstromes möglichst klein zu halten. Da die Fremdkörper bei der vorgeschlagenen Lösung nicht durch die Wärmetauscherelemente hindurchtreten brauchen, kann in vorteilhafter Weise die Rippendichte wesentlich, zum Beispiel auf 12 Rippen pro cm (30 Rippen pro inch) oder mehr, erhöht werden. Ferner kann in vorteilhafter Weise wenigstens eines der Wärmetauscherelemente um eine Achse verschwenkbar angeordnet werden. Dies erlaubt einen einfachen Zugang zu der Plenumkammer, um diese zu reinigen oder dergleichen.

Entsprechend einer weiteren Ausbildung der Erfindung können vier Wäremtauscherelemente vorgesehen sein, die in zwei ineinander geschachtelten V angeordnet sind. Die Basis des außenliegenden V hat wiederum im unteren Bereich einen Spalt, welcher den Durchtritt von Fremdkörpern erlaubt. Die Basis des inneren V ist dagegen abgedichtet. Luft wird vorzugsweise durch zwei Radiallüfter zwischen den beiden V hindurch zu der Basisöffnung des äußeren V gerichtet. Die Lüfter sind vorzugsweise unabhängig voneinander ansteuerbar, so daß ein Lüfter abgeschaltet werden kann, sofern eine geringe Kühlungsnachfrage als Bedingung vorliegt.

Weitere vorteilhafte Weiterbildungen der Erfindung sind den Unteransprüchen zu entnehmen.

Anhand der Zeichnung, die zwei Ausführungsbeispiele der Erfindung zeigt, sollen die Erfindung sowie weitere Vorteile und vorteilhafte Ausgestaltungen der Erfindung erläutert und näher beschrieben werden.

Es zeigt:
- Fig. 1: die perspektivische Darstellung einer ersten Ausgestaltung einer Wärmetauscheranordnung gemäß der vorliegenden Erfindung,
- Fig. 2: die Vorderansicht der Ausgestaltung gemäß Fig. 1,
- Fig. 3: die Vorderansicht einer zweiten Ausgestaltung der vorliegenden Erfindung,
- Fig. 4: eine Darstellung der Rippendichte, mit der ein Wärmetauscher gemäß der vorliegenden Erfindung ausgestattet ist, und
- Fig. 5: die Darstellung der Rippendichte entsprechend eines konventionellen Kühlers.

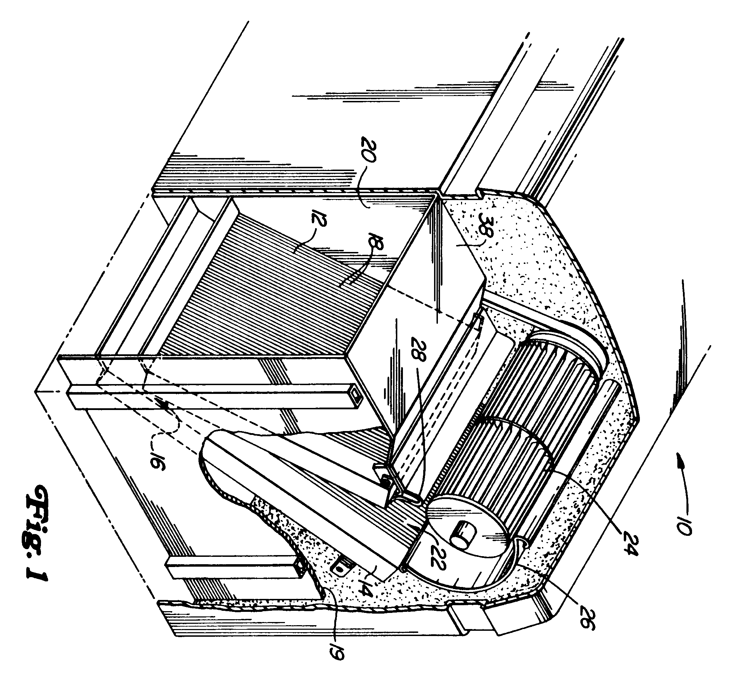

Die Fig. 1 stellt eine erste bevorzugte Ausgestaltung des Kühlsystems gemäß der vorliegenden Erfindung in einem teilweise geschnittenen Fahrzeugrumpf, hier ein Schlepperrumpf 10, dar. Zwei im wesentlichen flache, rechteckige Kühler 12, 14 sind im Schlepperrumpf 10 in einer V-Konfiguration angeordnet. Ein schmaler Spalt 16 ist an der Basis des V zwischen den beiden Kühlern 12, 14 vorgesehen. Ein Spalt in der Größenordnung von 5 - 20 mm (.2 - .8 inches) ist gewöhnlich ausreichend, obwohl auch größere oder kleinere Spalte verwendet werden können, falls dies gefordert wird.

Die Rippen 18 der Kühler 12, 14 sind vorzugsweise entlang des V ausgerichtet. Die Seiten des V sind vorzugsweise durch Stirnwände 19, 20 verschlossen, wodurch eine Plenumkammer 22 zwischen den Kühlern 12, 14 und den Stirnwänden 19, 20 gebildet wird.

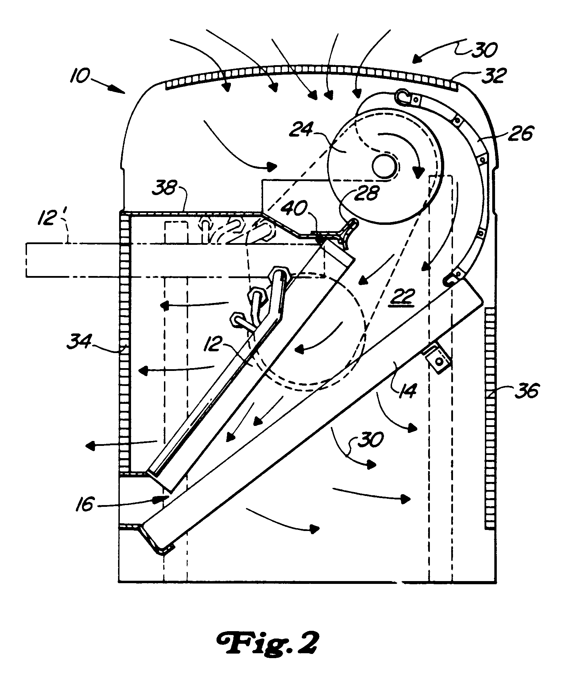

Ein Radiallüfter 24, bei dem der Luftstrom quer zur Lüfterachse abgeblasen wird, ist, wie dargestellt, am oberen Ende des Kühler-V angeordnet. Ein Windlauf 26 und Ansauganschluß 28 richten die Luft von dem Lüfter in das V hinein. Wie es aus Fig. 2 ersichtlich ist, tritt der Luftstrom (dargestellt durch die Pfeile 30) durch den Lüfter hauptsächlich radial durch eine Seite der Luftflügel ein und folglich radial durch die andere Seite der Luftflügel aus. Die Richtung der Strömung wird durch die Form und Lage des Windlaufes 26 und des Ansaugabschlußes 28 bestimmt. Jeder Lüfter kann Verwendung finden, einschließlich Lüfter mit nicht transversaler Strömung. Ein Radiallüfter wird jedoch bevorzugt, da er eine im wesentlichen gleichförmige Verteilung der Luft über die Breite des Kühlers 12, 14 erzeugt.

Anhand der Fig. 2 wird die Wirkungsweise erläutert. Luft strömt durch ein Gitter 32 an der oberen Seite des Schlepperrumpfes 10 ein. Sie wird durch den Lüfter 24 gezogen und in die Plenumkammer 22 geblasen. Hierdurch wird die Plenumkammer 22 unter Druck gesetzt, so daß Luft durch die Kühler 12, 14 getrieben wird. Diese Luft wird dann durch die Gitter 34, 36, die an den Seiten des Schlepperumpfes liegen, ausgestoßen. Das Blech 38 ist vorzugsweise zwischen dem Kühler 12 und dem oberen Teil des Schlepperumpfes 10 vorgesehen, um eine Trennung des inneren und äußeren Luftstromes sicherzustellen.

Alle Fremdkörper, die durch das obere Gitter 32 eingesaugt werden, werden durch den Lüfter 24 weiterbefördert und durch den Windlauf 26 in eine Richtung im wesentlichen nach unten in das V gegen den Spalt 16 an der Basis des V gelenkt. Hierdurch wird der größte Teil der Fremdkörper durch den Spalt 16 hinausgetragen. Durch die Ausrichtung der Rippen 18, die im wesentlichen parallel zu dem V verlaufen, werden Turbulenzen oder irgendwelche anderen Beeinträchtigungen des Stromes der Fremdkörper zu dem Spalt 16 vermindert.

Die in den Fig. 1 und 2 dargestellten Kühler 12, 14 sind relativ zu der horizontalen Ebene des Schlepperrumpfes 10 abgewinkelt angeordnet, so daß die Basis des V auf einer Seite des Traktors liegt. Die Kühler 12, 14 können so angeordnet sein, daß die Basis des V in irgendeiner Richtung relativ zu dem Schlepperrumpf liegt, wenngleich die Basis vorzugsweise im wesentlichen am tiefsten Punkt des V liegt, so daß die Gravitation die Funktionsweise des Wärmetauschers eher unterstützt als behindert.

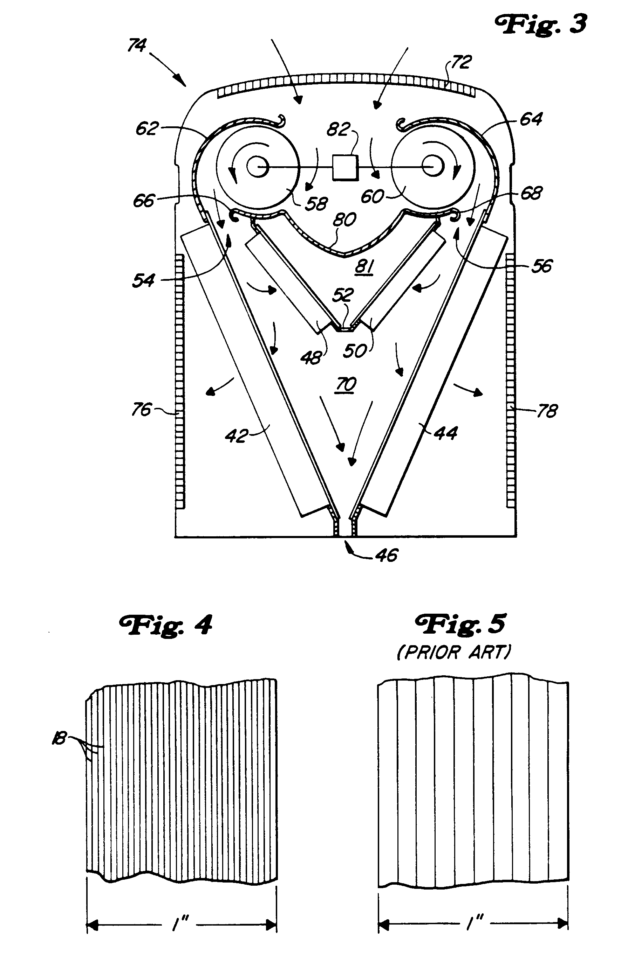

Da die Fremdkörper nicht durch die Kühler 12, 14 hindurchtreten müssen, können die Rippen 18 in dem Wärmetauscher gemäß der vorliegenden Erfindung beträchtlich dichter gepackt werden als in einem konventionellen Kühler. Konventionelle Kühler haben in etwa 2 bis 4 Rippen pro cm (5 bis 10 Rippen pro inch), während der Kühler im vorliegenden Aufbau ohne weiteres 8 bis 10 Rippen pro cm (20 bis 36 Rippen pro inch) oder mehr aufweisen kann. Die Fig. 4 illustriert schematisch die bevorzugte Rippendichte entsprechend der vorliegenden Erfindung mit 32 Rippen pro inch, und die Fig. 5 zeigt die typischen 10 Rippen pro inch entsprechend dem Stande der Technik. Dies verdeutlicht die beträchtliche Steigerung der Rippendichte. Natürlich erlaubt eine Steigerung der Rippendichte eine bedeutsame Erhöhung der Kühlwirkung für eine vorgegebene Kühlergöße.

Zurückkehrend zu Fig. 2 wird darauf hingewiesen, daß das Seitengitter 34 vorzugsweise entfernbar ist und der Kühler 12 um ein Scharnier 40 verschwenkbar montiert ist, so daß er bis zu der Phantomposition 12' verschwenkt werden kann. Dies erlaubt einen Zugang zu der Plenumkammer 22, wodurch die Reinigung von irgendwelchen Fremdkörpern, die sich dort angesammelt haben können, ermöglicht wird.

Anhand der Fig. 3 wird eine zweite bevorzugte Ausgestaltung des Wärmetauschers gemäß der vorliegenden Erfindung beschrieben. Diese Ausgestaltung verwendet anstelle der einfachen V-Struktur gemäß Fig. 1 und 2 eine doppelte V-Struktur. Auch hier sind zwei Kühler 42, 44 in einem V angeordnet und haben einen Spalt 46 an der Basis des V. Dieses Mal sind jedoch zwei zusätzliche Kühler 48, 50 in einem V angeordnet, welches innerhalb des V liegt, welches durch die größeren Kühler 42, 44 gebildet wird. Vorzugsweise wird ein Blech 52 oder andere Mittel benutzt, um irgendeinen Spalt an der Basis des durch die Kühler 48 und 50 gebildeten V zu schließen. Spalte 54, 56 sind zwischen dem oberen Endbereich der Kühler 42, 48 bzw. 44, 50 vorgesehen.

Zwei Radiallüfter 58, 60 sind oberhalb der Kühler 42, 44, 48, 50 befestigt. Windläufe 62, 64 und Ansaugabschlüsse 66, 68 leiten den Luftstrom von den Lüftern 58 bzw. 60 in die Spalte 54 bzw. 56 und in Richtung des Spaltes 46 an der Basis des äußeren V. Auch hier sind Stirnwände vorgesehen, um die Enden der Kühler 42, 44, 48, 50 zu verschliessen und zwischen ihnen eine Plenumkammer 70 zu bilden.

Bei Betrieb strömt Luft durch das obere Gitter 72 im Schlepperrumpf infolge der Radiallüfter 58, 60 ein und tritt in die Plenumkammer 70. Auch hier wird die Plenumkammer 70 unter Druck gesetzt, so daß die Luft durch die Kühler 42, 44, 48, 50 ausgetrieben wird. Die Luft, die aus den Kühlern 42, 44 austritt, tritt durch die Gitter 76, 78 an der Seite des Schlepperumpfes 74 hindurch. Luft, die durch die Kühler 48, 50 tritt, wird durch ein Blech 80 an einer Zirkulation gehindert. Statt dessen strömt sie durch die Enden der Kammer 81 aus, welche zwischen den Kühlern 48, 50 und dem Blech 80 begrenzt ist. Auch hier werden alle Fremdkörper, die durch die Lüfter 58, 60 hindurchgetreten sind, durch die Windläufe 62 bzw. 64 in Richtung des Spaltes 46 an der Basis des äußeren V gerichtet, so daß sie nicht durch das Innere der Kühler treten müssen. Die Kühlkörper haben auch hier eine bevorzugte, hohe Rippendichte, und ihre Rippen sind in Richtung der Seiten des V ausgerichtet.

Die zweite bevorzugte Ausgestaltung der Erfindung hat den Vorteil, daß es möglich wird, mehr oder verschiedenartigere Kühleroberflächen bereitzustellen. Zusätzlich können Steuermittel, die schematisch durch 82 dargestellt sind, vorgesehen sein, um einen der Lüfter 58, 60 in solchen Betriebssituationen abzustellen, in denen lediglich ein niedriges Kühlniveau gefordert wird. Der verbleibende Lüfter kann dann die erforderliche Kühlung besorgen.

## Patentansprüche

1. Wärmetauscher, insbesondere Kühler für die Antriebsmaschine eines Fahrzeuges, mit zwei im wesentlichen flachen, V-förmig zueinander angeordneten Wärmetauscherelementen (12, 14, 42, 44), die im Bereich der Basislinie des V durch einen schmalen, offenen Zwischenraum (16, 46) zueinander beabstandet sind, und mit wenigstens einem Lüfter (24, 58, 60), der einen Kühlmediumstrom in die sich öffnende Seite des V richtet,
dadurch gekennzeichnet,
daß das V sich im wesentlichen nach oben hin öffnet und der Zwischenraum (16, 46) im wesentlichen am tiefsten Punkt des V liegt,
daß zwischen Lüfter (24, 58, 60) und Wärmetauscherelementen (12, 14, 42, 44) Luftführungsmittel (26, 28, 62, 64, 66 68) vorgesehen sind und die Wärmetauscherelemente (12, 14, 42, 44) derart spitzwinklig zueinander angeordnet sind, daß der vom Lüfter (24, 58, 60) ausgehende Kühlmittelstrom im wesentlichen entlang der Oberflächen der Wärmetauscherelemente (12, 14, 42, 44) und in Richtung des Zwischenraumes (16, 46) gerichtet ist, wobei zwischen den Wärmetauscherelementen (12, 14, 42, 44) eine Plenumkammer (22, 70) ausgebildet ist, in der sich ein erhöhter Druck des Kühlmediums ausbildet und wobei das Kühlmedium infolge der über den Wärmetauscherelementen (12, 14, 42, 44) herrschenden Druckdifferenz durch die Wärmetauscherelemente (12, 14, 42, 44) hindurchgedrückt wird.

2. Wärmetauscher nach Anspruch 1, dadurch gekennzeichnet, daß Seitenabschlußmittel (19, 20) vorgesehen sind, die die Seiten des V im wesentlichen abdecken, so daß die Plenumkammer (22) zwischen den Wärmetauscherelementen (12, 14) und den Seitenabschlußmitteln (19, 20) ausgebildet ist.

3. Wärmetauscher nach Anspruch 1 oder 2, dadurch gekennzeichnet, daß wenigstens ein Lüfter als Radiallüfter (24, 58, 60) und die Luftführungsmittel (26, 28, 62, 64, 66, 68) so ausgebildet sind, daß sie das Kühlmedium in die Plenumkammer (22, 70) leiten.

4. Wärmetauscher nach einem der Ansprüche 1 bis 3, dadurch gekennzeichnet, daß zwei weitere, im wesentlichen flache Wärmetauscherelemente (48, 50) V-förmig zueinander und im wesentlichen innerhalb des V der erstgenannten Wärmetauscherelemente (42, 44) derart angeordnet sind, daß die beiden V-Konfigurationen gleichsinnig ausgerichtet und ineinander geschachtelt sind, so daß die Plenumkammer (70) zwischen den beiden V-Konfigurationen liegt und durch die Wärmetauscherelemente (42, 44, 48, 50) begrenzt wird, und daß wenigstens zwischen dem oberen Endbereich eines äußeren Wärmetauscherelementes (42, 44) und dem oberen Endbereich eines inneren Wärmetauscherelementes (48, 50) ein Zwischenraum (54, 56) besteht, durch den das Kühlmedium in die Plenumkammer (70) geleitet wird.

5. Wärmetauscher nach Anspruch 4, dadurch gekennzeichnet, daß jeweils zwischen den äußeren Wärmetauscherelementen (42, 44) und den jeweils benachbarten inneren Wärmetauscherelementen (48, 50) ein Zwischenraum (54, 56) besteht und daß jeder der beiden Zwischenräume (54, 56) mit einem Radiallüfter (58, 60) in Verbindung steht.

6. Wärmetauscher nach einem der Ansprüche 1 bis 5, dadurch gekennzeichnet, daß als Druckerhöhungsmittel wenigstens zwei Lüfter (58, 60) vorgesehen sind, welche durch Steuermittel (82) einzeln einschaltbar sind.

7. Wärmetauscher nach einem der Ansprüche 1 bis 6, dadurch gekennzeichnet, daß das Wärmetauscherelement (12, 14, 42, 44, 48, 50) eine Vielzahl von Wärmetauscherrippen (18) aufweist, zwischen denen das Kühlmedium durchtreten kann.

8. Wärmetauscher nach Anspruch 7, dadurch gekennzeichnet, daß die Rippen (18) im wesentlichen parallel zueinander und von oben nach unten verlaufen.

9. Wärmetauscher nach Anspruch 7 oder 8, dadurch gekennzeichnet, daß die Dichte der Rippen (18) mindestens 8 Rippen (18) pro cm beträgt.

10. Wärmetauscher nach einem der Ansprüche 1 bis 9, dadurch gekennzeichnet, daß wenigstens ein Wärmetauscherelement (12) um eine Achse verschwenkbar angeordnet ist.

## Claims

1. Heat exchanger, in particular a cooler for the prime mover of a vehicle, with two substantially flat heat exchanger elements (12, 14, 42, 44) arranged in a V-shape with respect to one another and which are spaced apart with respect to one another in the region of the base line of the V by a narrow, open gap (16,46), and with at least one fan (24, 58, 60) directing a stream of cooling medium into the opening side of the V, characterised in that the V opens substantially upwards and the gap (16, 46) is located substantially at the lowest point of the V and air guiding means (26, 28, 62, 64, 66, 68) are provided between the fan (24, 58, 60) and the heat exchanger elements (12, 14, 42, 44) and the heat exchanger elements (12, 14, 42, 44) are arranged in such manner at an acute angle to one another that the stream of cooling medium issuing from the fan (24, 58, 60) is directed substantially along the surfaces of the heat exchanger elements (12, 14, 42, 44) and towards the gap (16, 46), there being formed between the heat exchanger elements (12, 14, 42, 44) a plenum chamber (22, 70) in which an increased pressure of the cooling medium develops and the cooling medium being forced through the heat exchanger elements (12, 14, 42, 44) in consequence of the pressure difference prevailing over the heat exchanger elements (12, 14, 42, 44).

2. Heat exchanger according to claim 1, characterised in that lateral closure means (19, 20) are provided which substantially cover the sides of the V, so that the plenum chamber (22) is formed between the heat exchanger elements (12, 14) and the lateral closure means (19, 20).

3. Heat exchanger according to claim 1 or 2, characterised in that at least one fan is so formed as a radial fan (24, 58, 60) and the air guiding means (26, 28, 62, 64, 66, 68) are so formed that they conduct the cooling medium into the plenum chamber (22, 70).

4. Heat exchanger according to any one of claims 1 to 3, characterised in that two additional, substantially flat, heat exchanger elements (48, 50) are so arranged in a V-shape with respect to one another and essentially within the V of the first-mentioned heat exchanger elements (42, 44) that the two V-configurations are aligned in the same direction and fitted one within the other, so that the plenum chamber (70) is located between the two V-configurations and defined by the heat exchanger elements (42, 44, 48, 50), and a gap (54, 56) through which the cooling medium is conducted into the plenum chamber (70) exists at least between the upper end region of an outer heat exchanger element (42, 44) and the upper end region of an inner heat exchanger element (48, 50).

5. Heat exchanger according to claim 4, characterised in that there is a gap (54, 56) in each case between the outer heat exchanger elements (42, 44) and the respectively adjacent inner heat exchanger elements (48, 50) and each of the two gaps (54, 56) is in communication with a radial fan (58, 60).

6. Heat exchanger according to any one of claims 1 to 5, characterised in that at least two fans (58, 60) which can be switched on individually by control means (82) are provided as pressure increasing means.

7. Heat exchanger according to any one of claims 1 to 6, characterised in that the heat exchanger element (12, 14, 42, 44, 48, 50) has a large number of heat exchange fins (18) between which the cooling medium can pass.

8. Heat exchanger according to claim 7, characterised in that the fins (18) extend substantially parallel to one another and from top to bottom.

9. Heat exchanger according to claim 7 or 8, characterised in that the density of the fins (18) is at least 8 fins (18) per cm.

10. Heat exchanger according to any one of claims 1 to 9, characterised in that at least one heat exchanger element (12) is arranged to be swingable about an axis.

## Revendications

1. Echangeur de chaleur, notamment refroidisseur pour le moteur d'entraînement d'un véhicule, avec deux éléments échangeurs de chaleur (12, 14, 42, 44) essentiellement plats et disposés en forme de V l'un par rapport à l'autre, qui sont espacés l'un de l'autre dans la zone de la ligne de base du V par un espace intermédiaire (16, 46) étroit et ouvert, et avec au moins un ventilateur (24, 58, 60) qui dirige un flux de milieu de refroidissement dans le côté ouvrant du V, caractérisé en ce que le V s'ouvre essentiellement vers le haut, et l'espace intermédiaire (16, 46) est situé essentiellement au point le plus bas du V, des moyens de guidage d'air (26, 28, 62, 64, 66, 68) sont prévus entre le ventilateur (24, 58, 60) et les éléments échangeurs de chaleur (12, 14, 42, 44), lesdits éléments échangeurs de chaleur (12, 14, 42, 44) étant disposés entre eux en formant un angle aigu, d'une manière telle que le flux de milieu de refroidissement sortant du ventilateur (24, 58, 60) est dirigé essentiellement le long des surfaces des éléments échangeurs de chaleur (12, 14, 42, 44) et en direction de l'espace intermédiaire (16, 46), un collecteur d'air d'aspiration (22, 70) étant ménagé entre les éléments échangeurs de chaleur (12, 14, 42, 44), dans lequel s'établit une pression accrue du milieu de refroidissement, et le milieu de refroidissement étant poussé dans les éléments échangeurs de chaleur (12, 14, 42, 44) en raison de la différence de pression régnant au-dessus des éléments échangeurs de chaleur (12, 14, 42, 44).

2. Echangeur de chaleur selon la revendication 1, caractérisé en ce que des moyens latéraux de fermeture (19, 20) sont prévus, qui recouvrent essentiellement les côtés du V, de sorte que le collecteur d'air d'aspiration (22) est ménagé entre les éléments échangeurs de chaleur (12, 14) et les moyens latéraux de fermeture (19, 20).

3. Echangeur de chaleur selon la revendication 1 ou 2, caractérisé en ce qu'au moins un ventilateur sous la forme d'un ventilateur radial (24, 58, 60) et les moyens de guidage d'air (26, 28, 62, 64, 66, 68) sont conformés d'une manière telle qu'ils dirigent le milieu de refroidissement dans le collecteur d'air d'aspiration (22, 70).

4. Echangeur de chaleur selon une des revendications 1 à 3, caractérisé en ce que deux autres éléments échangeurs de chaleur (48, 50) essentiellement plats sont disposés en forme de V l'un par rapport à l'autre et essentiellement à l'intérieur du V des éléments échangeurs de chaleur (42, 44) cités en premier, d'une manière telle que les deux configurations en V sont alignées dans le même sens et emboîtées l'une dans l'autre, de sorte que le collecteur d'air d'aspiration (70) est situé entre les deux configurations en V et délimité par les éléments échangeurs de chaleur (42, 44, 48, 50), et qu'un espace intermédiaire (54, 56), par lequel le milieu de refroidissement est dirigé dans le collecteur d'air d'aspiration (70), est formé au moins entre la zone d'extrémité supérieure d'un élément échangeur de chaleur extérieur (42, 44) et la zone d'extrémité supérieure d'un élément échangeur de chaleur intérieur (48, 50).

5. Echangeur de chaleur selon la revendication 4, caractérisé en ce qu'un espace intermédiaire (54, 56) est formé à chaque fois entre les éléments échangeurs de chaleur extérieurs (42, 44) et les éléments échangeurs de chaleur (48, 50) respectivement voisins, et que chacun des deux espaces intermédiaires (54, 56) communique avec un ventilateur radial (58, 60).

6. Echangeur de chaleur selon une des revendications 1 à 5, caractérisé en ce qu'il est prévu, comme moyen d'augmentation de la pression, au moins deux ventilateurs (58, 60) qui peuvent être actionnés individuellement par des moyens de commande (82).

7. Echangeur de chaleur selon une des revendications 1 à 6, caractérisé en ce que l'élément échangeur de chaleur (12, 14, 42, 44, 48, 50) comporte une pluralité de nervures d'échangeur de chaleur (18) entre lesquelles le milieu de refroidissement peut passer.

8. Echangeur de chaleur selon la revendication 7, caractérisé en ce que les nervures (18) s'étendent de manière essentiellement parallèle entre elles et de haut en bas.

9. Echangeur de chaleur selon la revendication 7 ou 8, caractérisé en ce que la densité des nervures (18) est d'au moins 8 nervures (18) par centimètre.

10. Echangeur de chaleur selon une des revendications 1 à 9, caractérisé en ce qu'au moins un élément échangeur de chaleur (12) est disposé de manière à pouvoir pivoter autour d'un axe.
